# EUROPEAN PATENT SPECIFICATION

(11) **EP 1 099 218 B1**
(45) Date of publication and mention of the grant of the patent: **04.09.2002**
(21) Application number: 99935727.0
(22) Date of filing: 20.07.1999
(51) Int. Cl.: G11B 19/02, G11B 27/10, G11B 27/34, G06F 3/033, H04N 5/85

(54) **DIGITAL VIDEO APPARATUS USER INTERFACE**
BENUTZERSCHNITTSTELLE FÜR EIN DIGITALES VIDEOGERÄT
INTERFACE UTILISATEUR POUR APPAREIL VIDEO NUMERIQUE

(30) Priority: 20.07.1998 US 93346 P; 20.07.1998 US 93347 P
(43) Date of publication of application: 16.05.2001
(73) Proprietor: Thomson Licensing S.A., 92648 Boulogne Cedex (FR)
(72) Inventor: LEWIS, Debbie, Indira, Norcross, GA 30092 (US); DESAI, Pratish, Ratilal, Fremont, CA 94555 (US); MILLER, Robert, Howard, Leawood, KS 66206-1811 (US); RICH, Michael, Dillon, Fishers, IN 46038-8931 (US)
(74) Representative: Kohrs, Martin
(86) International application number: US9916375
(87) International publication number: WO00004539

(56) References cited:
- EP-A- 0 325 325
- EP-A- 0 788 101
- EP-A- 0 797 205
- EP-A- 0 836 192
- US-A- 5 929 857
- PATENT ABSTRACTS OF JAPAN vol. 1997, no. 05, 30 May 1997 (1997-05-30) & JP 09 017101 A (TOSHIBA CORP), 17 January 1997 (1997-01-17)

## Description

### Field of the Invention

The present invention relates to a user interface for a digital video apparatus, and in particular, a user interface for a digital video apparatus capable of selectively processing data blocks in a particular sequence in response to a user selected sequence.

### Background

Video signal processing systems that utilize storage media having digitally compressed video and audio information recorded thereon can give the user a vast number of options for controlling playback of portions of program information, e.g., a video title, stored on such a media. One such system that is gaining rapid acceptance comprises a video disc player adapted to process information stored in accordance with the digital video disc (DVD) specification. The information on a DVD formatted disc is recorded as discrete packets of data, in accordance with the applicable video and audio data compression standards, wherein designated packets carry data associated with various data streams, such as alternative video angles, audio tracks, subpicture streams, etc. A disc player reading a DVD formatted disc may be controlled to display certain packets of data and skip over others. In this manner, the DVD system can be used to prevent unauthorized access to information on a particular disc as well as seamlessly provide multiple variations of a video title, such as multiple camera angles and story endings, in accordance with user commands.

One useful aspect of the digital video disc system described above is the ability to quickly determine the contents of the disc and allow the user to begin the playback of the disc from a particular point on the disc. In addition to various video streams, audio streams, and subpicture streams, DVD formatted discs are generally authored to include a plurality of various other types of portions of program information. For example, a disk may include one or more video titles, wherein each video title corresponds to a designated program unit such as a movie or a television episode. Each video title may in turn be divided into one or more part-of-title units, also called chapters, wherein each chapter corresponds to a determined portion of the video title. A disk may also include various subtitling information, e.g., subtitles in English, French, German, etc.

In order to navigate between video titles and between chapters, a DVD formatted disc often includes a menu authored onto the disc. The disc menu lists the video titles available on the disc and the title menu lists the chapters available in the respective video titles. By calling up an appropriate menu, a user can determine which titles or chapters are available and control the disc player to start play from the beginning of a selected title or chapter.

However, in order to search a disc or a video title and start playback from a new location on the disc, a user must stop disc playback, call up the appropriate menu or menus, make the necessary selections, and restart the disc. Even if the user is not directly required to start and stop disc playback, the disc player automatically halts playback of the disc and restarts the disc when the user selects the title or chapter. It can be seen that repeated searches for various titles and/or chapters can quickly become annoying because the user is forced to repeat the above noted steps for each search.

In addition, a typical user interface may not clearly indicate what titles and chapters are available on a storage medium. For example, a DVD disc may have as many as 99 titles and 999 chapters. However, information available to a user may not clearly indicate how many of these chapters are actually available on a particular disc. As a result, a user may attempt to select a title or chapter that does not exist or is unavailable.

Also, in order to determine certain attributes associated with portions of the program information stored on a disc, e.g., the type of audio information (e.g., MPEG, AC3) or the number of audio channels available (e.g., 2 channel stereo or 6 channel surround sound), it may be necessary to actually select a particular portion of the program information. For example, it may be necessary to select a particular audio stream to determine whether the audio information provides 6 channel sound.

EP-A-0 836 192 discloses a system for reproducing data from a storage medium having multiple scenes stored thereon. The system provides a menu that displays scenes representative of the various program movements stored on the storage medium. The menu allows the user to determine which program movements are available on the storage medium and to select a desired one of the program movements. According to D1, the user can also designate and set an order in which the program bars should be reproduced.

Therefore, what is desired is a user interface, apparatus and method which allows the user to better understand what program information is included on a disk and, therefore, more easily navigate through the information included on the disk.

### Summary of the Invention

In accordance with the present invention, a method for controlling a system for processing information stored on a storage medium as defined in claim 1, including a plurality of portions of program information, includes the following steps: accessing a first one of a plurality of portions of program information played back during a playback mode of operation; providing to a user, during the playback mode of operation, an opportunity to select a second one of the plurality of portions of program information responsive to user input; providing information to the user for identifying the first one of the plurality of portions of program information and for indicating attributes associated with other ones of the plurality of portions of program information that are available for selection by the user; and changing to playing back the selected second one of the plurality of portions of program information during the playback mode of operation. Apparatus for controlling a system for processing such information as defined in claim 6 includes playback circuitry for retrieving information from one of a plurality of portions of program information stored on the storage medium during a play mode of operation. A user control device receives user input. A control unit conditions the playback circuitry to enter the play mode of operation, select a first one of the plurality of portions of program information during the play mode of operation in response to the user input, providing information to the user for identifying the first one of the plurality of portions of program information and for indicating other ones of the plurality of portions of program information that are available for selection by the user; and changing to playing back the selected one of the plurality of portions of program information during the playback mode of operation. In accordance with another aspect of the invention, the storage medium comprises a DVD and the plurality of portions of program information comprise titles and/or chapters stored on the DVD.

### Brief Description of the Drawing

The invention will be described with reference to the accompanying drawings, wherein:
Fig. 1 is a block diagram of a video processing system in accordance with the DVD specification;
Fig. 2 is a block diagram of a digital video disc player suitable for implementing the dynamic title and part-of-title search feature of the present invention;
Fig. 3 is a block diagram illustrating navigation between the disc player domain and the DVD domain;
Fig. 4 is a detailed block diagram illustrating navigation between the disc player domain and the DVD domain;
Fig. 5A, 5B, 5C, and 5D show an on-screen display suitable for providing disc player and disc status information;
Fig. 6 is a diagram of a data structure in accordance with the DVD specification;
Fig. 7 is a block diagram of a presentation structure in accordance with the DVD specification;
Figs. 8 a-b are block diagrams illustrating sample playback options available in the DVD format;
Fig. 9A, 9B and 9C show an on-screen display for selection of portions of program information stored on a storage medium; and
Figs. 10 and 11 are block diagrams illustrating the operation of a video processing system according to the present invention.

### Detailed Description

Although the exemplary embodiment is described with reference to a digital video apparatus adapted to read compressed video and audio data from a disc and to process the data in accordance with the DVD specification, it is to be understood that the present invention may be used in any digital video apparatus capable of processing digital video and audio data, wherein the data is divided into predetermined units, such as video title and part of title, so that the apparatus can determine how the data is divided and may begin playback from a user selected point, such as the beginning of a particular title or chapter.

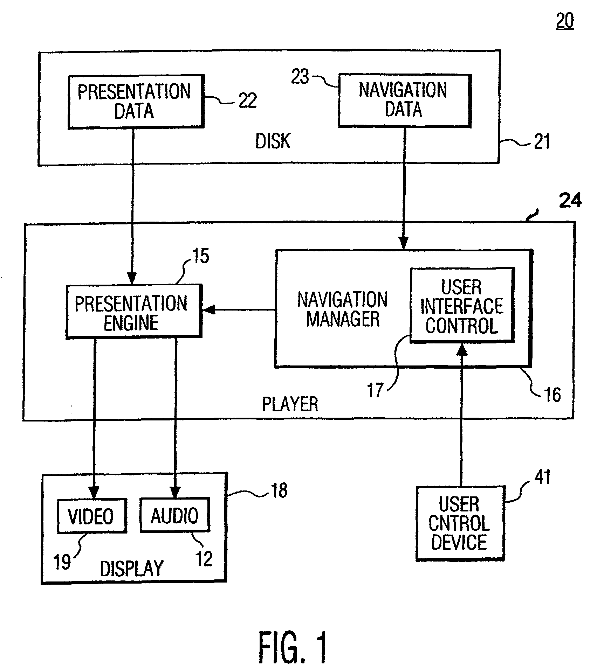

Fig. 1 is a block diagram of video processing system 20 in accordance with the DVD specification. In particular, Fig. 1 illustrates the basic relationship between presentation data and navigation data in video processing system 20 which comprises disc player 24 and DVD formatted disc 21. The contents of disc 21 are read by disc player 24 and displayed on display 18 in accordance with commands from user control device 41. Disc 21 includes presentation data 22 and navigation data 23, wherein presentation data 22 comprises the data to be played back in the form of video, audio, subpictures, etc., and navigation data 23 comprises control data for determining how presentation data 22 is displayed. Disc 21 may also include data to generate a menu for allowing the user to interactively control the manner in which presentation data 22 is displayed.

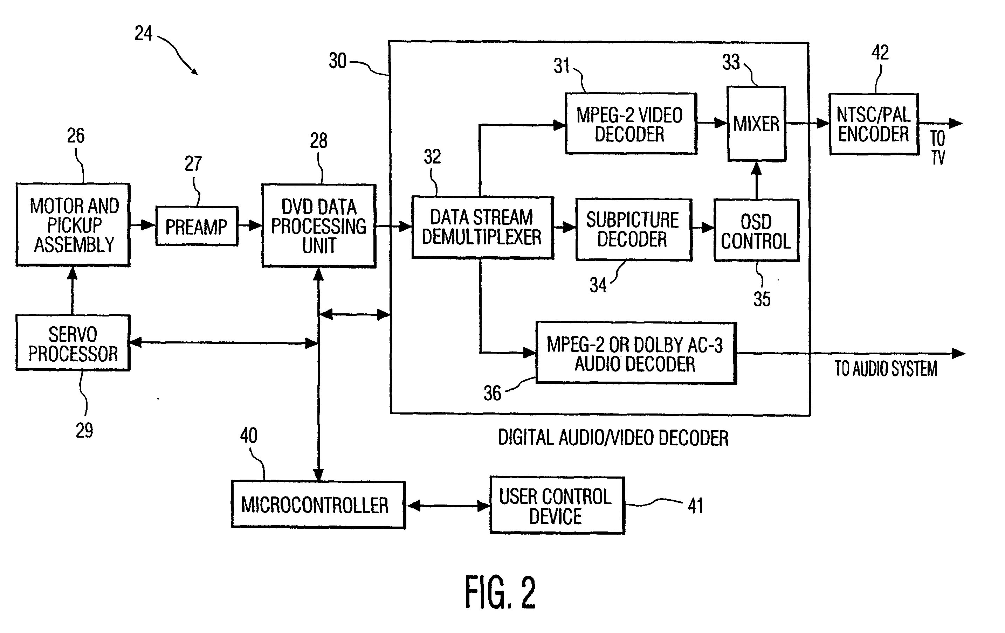

Disc player 24 includes presentation engine 15 and navigation manager 16, which may be implemented in a microcontroller described with respect to Fig. 2 below. Presentation engine 15 receives presentation data 22, and under control of navigation manager 16, provides an output to display 18. Display 18 comprises an audio output device 12 and a video display device 19. Navigation manager 16 includes user interface control 17 which provides a user interface, creates menus, etc. Navigation manager 16 uses information from navigation data 23 to control the output of presentation engine 15 to display 18. User control device 41 is coupled to navigation manager 16 and allows for user entry of data to control the manner in which navigation manager 16 controls presentation engine 15.

Fig. 2 is a block diagram showing the basic elements of an exemplary digital video disc player suitable for use in system 20 of Fig. 1 and for implementing the dynamic search feature of the present invention. The construction and operation of these elements are known to one of ordinary skill in the art and will not be discussed in detail here. Disc player 24 comprises motor and pickup assembly 26 which, under the control of servo processor 29, spins the disc and reads the information stored thereon. Preamp 27 and DVD data processing unit 28 translate the electrical pulses from motor and pickup assembly 26 into digital data that can be further processed by digital audio/video decoder unit 30. DVD data processing unit 28 typically performs functions such as demodulation, error correction and descrambling of the raw data read from the disc so that the data is in a suitable format for decoder unit 30.

Decoder unit 30 receives the demodulated, error corrected and descrambled data, processes the data, and provides the appropriate video and audio signals to a display unit, such as a television set. Decoder unit 30 comprises data stream demultiplexer 32 which demultiplexes the data from data processing unit 28 into a plurality of separate data streams, including a video stream, an audio stream and a subpicture stream, and provides the data streams to their respective data decoders. Video decoder 31 receives the video stream and provides a video signal to mixer 33. Subpicture decoder 34 receives the subpicture stream and provides data to on-screen display (OSD) control 35 which provides OSD video signals to mixer 33. The combined video signal from mixer 33 is provided to NTSC/PAL encoder 42 which provides a video signal that conforms to the appropriate video signal standard to a video display device. Audio decoder 36 receives the audio streams from data stream demultiplexer 32 and provide the appropriate audio signals to an audio system.

Microcontroller 40 controls the operation of disc player 24. Microcontroller 40 is coupled to user control device 41, which may comprise IR remote control devices, front panel buttons or the like, and translates data from user control device 41 to control the operation of the various elements of disc player 24 described above. Typically, microcontroller 40 is also configured to control various access features of disc player 24 including, but not limited to, parental lock out, decryption of encrypted discs, dialing remote controllers to gain access to encrypted discs. Microcontroller 40 may be embodied in various forms, including, but not limited to, a dedicated integrated circuit, or a part of a decoder/controller unit. Microcontroller 40 may be comprised of one of a plurality of suitable controller units, including, but not limited to STI 5500, manufactured by SGS Thomson.

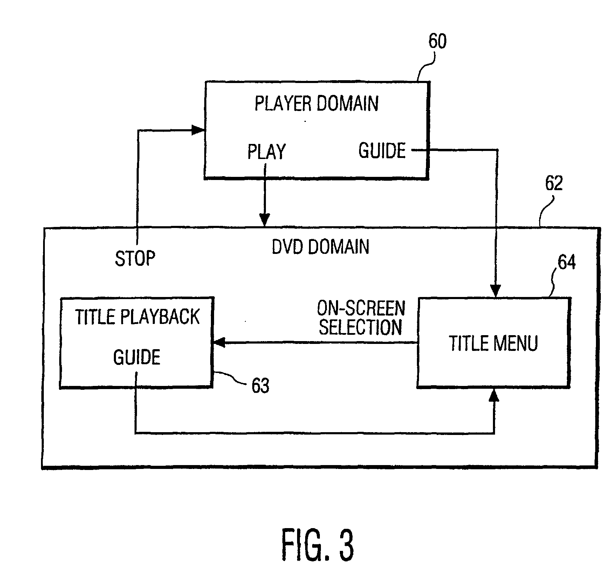

Fig. 3 illustrates the basic navigation scheme between the video player domain 60 and the disc domain 62. Entering a PLAY command or calling for guide data moves control to disc domain 62, wherein title playback proceeds as indicated by title playback block 63 or a title menu is displayed as indicated by title menu block 64. On-screen selections made from the title menu controls the playback sequence. A STOP command returns the user to player domain 60.

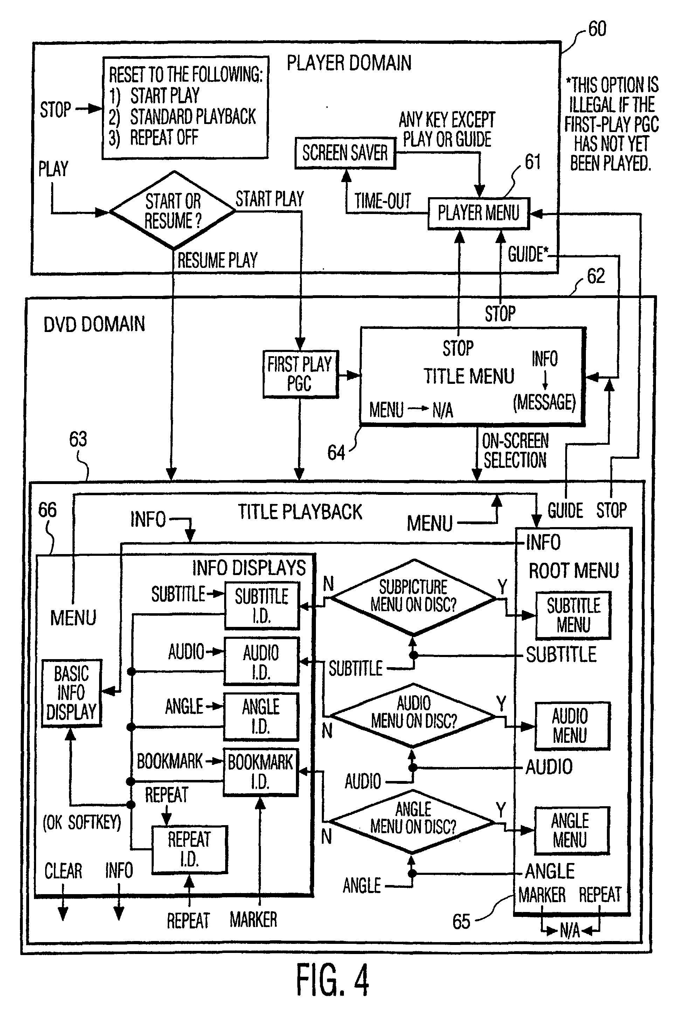

A more detailed illustration of the navigation scheme between player domain 60 and disc domain 62 is shown in Fig. 4. As shown in Fig. 4, player domain 60 includes player menu 61 for allowing the user to select certain operating conditions for the player, for example parental control ratings. Also, DVD domain 62 includes title menu 64 for providing information about the respective video title. On-screen selection from title menu 64 may transfer the user to title playback block 63 which includes provisions for root menu 65. Root menu 65 may be authored onto a disc to provide information about available options on the disc including, but not limited to, subtitles, audio tracks and camera angles.

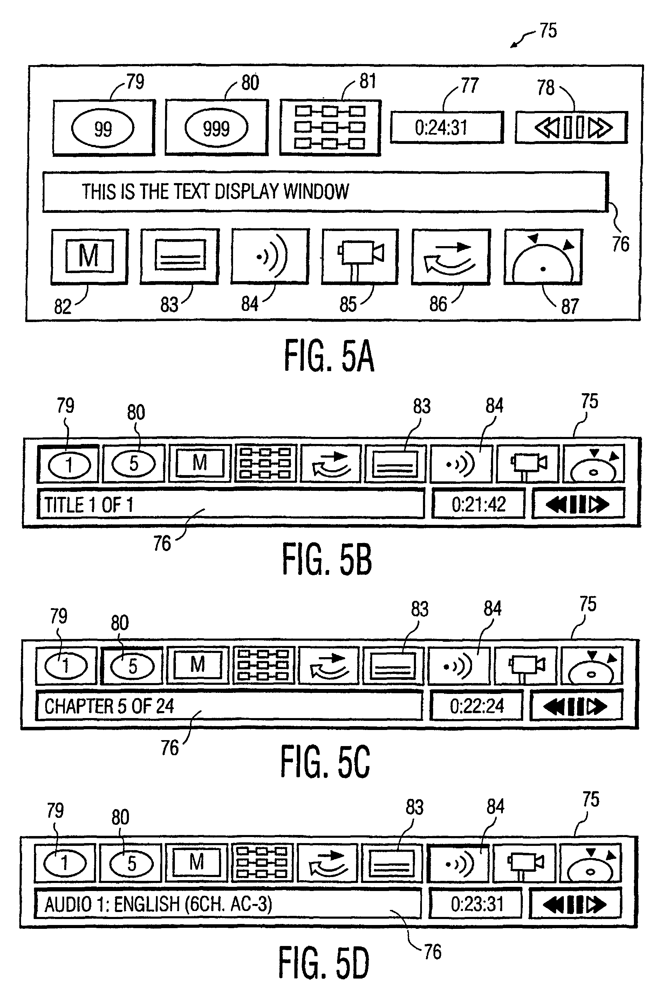

If the disc does not include a root menu 65 authored thereon, it is advantageous to include a provision for generating an information display, developed from the actual video and audio information stored on the disc, which identifies and displays the available options to the user. Such a provision is indicated by information display block 66. Fig. 5A illustrates an example of an information display 75 that may be used for identifying and displaying the options available on the disc to the user when a root menu 65 is not available from DVD domain 62. Alternatively, disc player 24 may be configured to allow the user to select information display 75 rather than root menu 65 even if root menu 65 exists in DVD domain 62.

As shown in Fig. 5A, information display 75 comprises text display portion 76 surrounded by a plurality of displays and buttons 77-87 for providing information about the contents of the disc and allowing the user to make various selections to control various aspects of the disc playback. Timer display 77 provides time information regarding the disc being played and transport display 78 shows the direction and speed of the disc drive. Button 79 provides access to information regarding the number of the current title. Button 80 provides access to information regarding the number of the current chapter. These buttons are described in detail further below. Button 81 allows the user to access a playmode display for dynamically selecting a particular playmode. Button 81 and its associated on-screen display are discussed below. Button 82 allows the user to access the root menu of the disc. Button 83 provides access to information regarding subtitles on the disc. Button 84 allows the user to select from available audio streams. Button 85 allows the user to select from available camera angles. Button 86 allows the user to select from available repeat modes. Button 87 allows the user to set bookmarks and jump to a previously set bookmark.

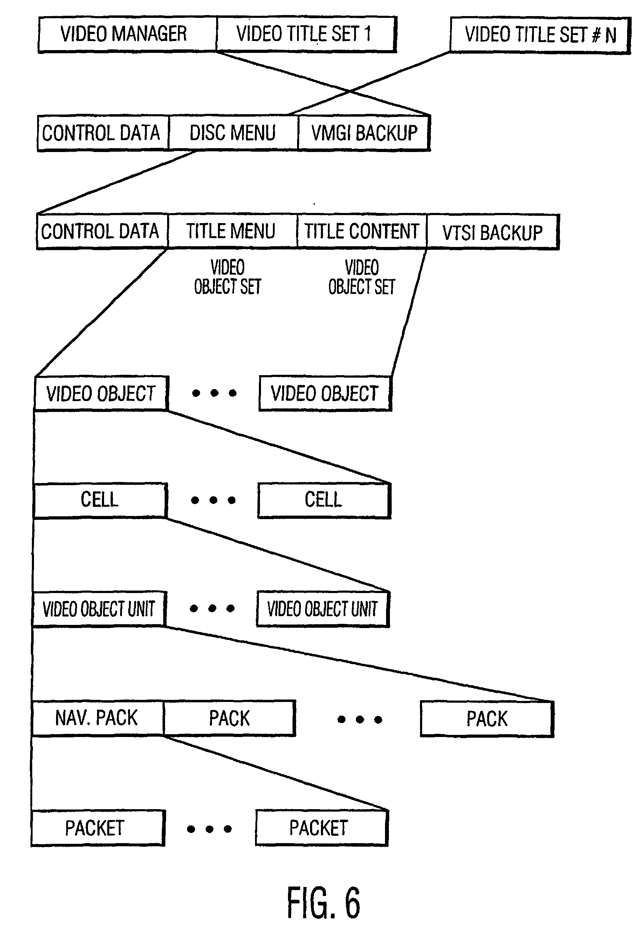

Fig. 6 illustrates a data structure in accordance with DVD specification 1.0 and suitable for use in video processing system 20. The data structure is hierarchical, wherein each data block is divided up into component data blocks, which are further divided into smaller component data blocks. At the top of the hierarchy is a video manager block and one or more video title sets. The term video title set corresponds to the term video title used in this application. The video manager includes a control data block having control information applicable to the disc and a disc menu. Each video title set corresponds to a designated program unit, for example, a movie or an episode of a television show.

Each video title set includes a control data block having control information applicable to the video title set, a title menu, followed by the title content, and a control data backup block. The title menu and the title content are each comprised of video object sets, wherein each video object set comprises a plurality of video objects. Each video object is comprised of a plurality of cells and each cell is in turn comprised of a plurality of video object units. Each video object unit is comprised of a navigation pack and a plurality of packs, which are subdivided into a plurality of packets. The smallest addressable block of data is a cell, wherein a cell may hold data for as short as a single scene or as long as an entire movie.

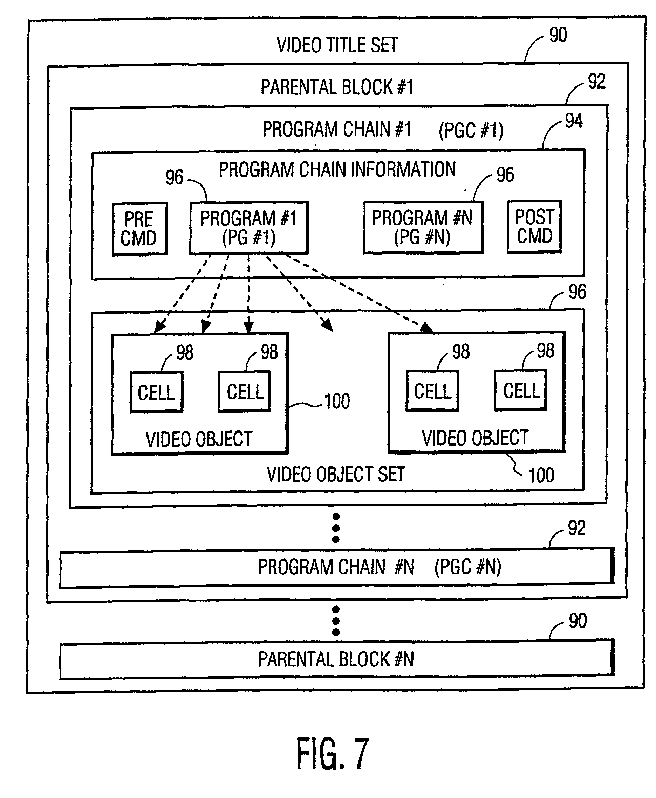

Fig. 7 illustrates a presentation structure in accordance with DVD specification 1.0 and suitable for use in video processing system 20. The presentation structure is overlaid onto the data structure shown in Fig. 6. The presentation structure and the data structure intersect at the cell level. As shown in Fig. 7, each video title set may be comprised of a plurality of parental blocks 90, wherein each parental block is comprised of one or more program chains (PGCs) 92. Each program chain contains program chain information block 94 and video object set 96. Program chain information block 94 includes one or more programs (PGs) 96, each of which include a collection of pointers to cells 98 contained in respective video objects 100 in video object set 96. Programs 96 link cells 98 together and indicate the order in which they are to be played. Therefore, by providing the appropriate pointers to the desired cells, a program chain 92 provides a particular playback sequence and a collection of program chains 92 provide a playback sequence for the video title set. It can be seen that multiple parental blocks, each containing different program chains, may be created to generate multiple playback sequences corresponding to different parental control ratings.

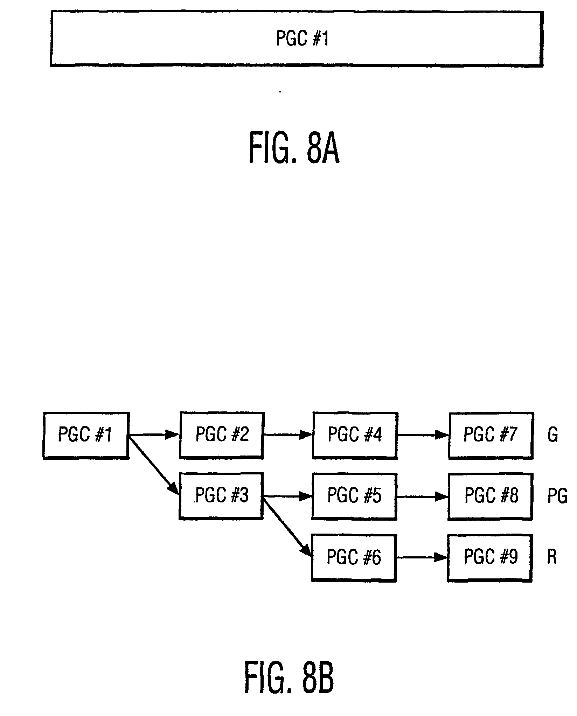

Different versions of a video title set, corresponding to different parental control ratings, may be provided by the disc author to enable disc player 24 to seamlessly branch between various scenes to provide multiple playback sequences for a particular video title set. By setting the user selected parental rating to a low level, objectionable scenes may be skipped over for younger viewers, while an unedited version of the program may be viewed by older viewers by setting the user selected parental rating to a higher level. The seamless branching is achieved by linking and displaying the desired cells, programs and program chains as desired. Figs. 8 a-b illustrate a single playback sequence and a multiple playback sequence provided by seamlessly branching between groups of program chains. In Fig. 8a, the disc only provides for a single playback sequence which comprises program chain #1, wherein the playback proceeds in one continuous sequence. In Fig. 8b, multiple playback sequences are provided, wherein a G-rated sequence would follow program chains 1, 2, 4 and 7, while a PG-rated playback sequence would follow program chains 1, 3, 5 and 8, and an R-rated playback sequence would follow program chains 1, 3, 6 and 9.

The present invention provides a user interface, method and apparatus for allowing a user to dynamically search and select a playback point so that the user is not forced perform the procedure detailed above. This playback point defines a portion of the title, and is referred to in this application as a chapter. DVD specification 1.0 details the information required from the DVD discs to carry out a title or part of title search. The present invention provides a layer above the actual implementation of the title or part of title (chapter) search function.

The operation of disc player 24 in implementing the present user interface is described with reference to Fig. 5A. In Fig. 5A, button 79 is used to dynamically perform a title search and select a new title for playback. Button 79 may be selected using one of a plurality of conventionally known methods such as using cursor control keys on a remote control device or a keyboard to move a highlight or a cursor on the display. When button 79 is highlighted without actually selecting the button (e.g., moving a cursor over button 79 to cause button 79 to be highlighted without completing a selection operation such as clicking an "enter" button), text block 76 displays the descriptive information associated with the current title. The display describes the title and indicates how many titles are available from the disc, for example by stating "title 1 of 4". In addition to descriptive information about the title, the text display comprises two numbers: the first number, e.g., "1", identifies the current title and the second number, e.g., "4", indicates the maximum number of titles available on the disk. The text display serves to indicate which titles are available for selection, e.g., titles 1 through 4. In addition, by indicating that titles 1 through 4 exist on the disc, the text display also indicates which titles, or portions of the program information, are unavailable for selection, i.e., titles 5 through 99. Thus, the user obtains information regarding available titles without actually selecting a new title. Fig. 5B provides a specific example of the display in text box 76 associated with highlighting or selection of button 79.

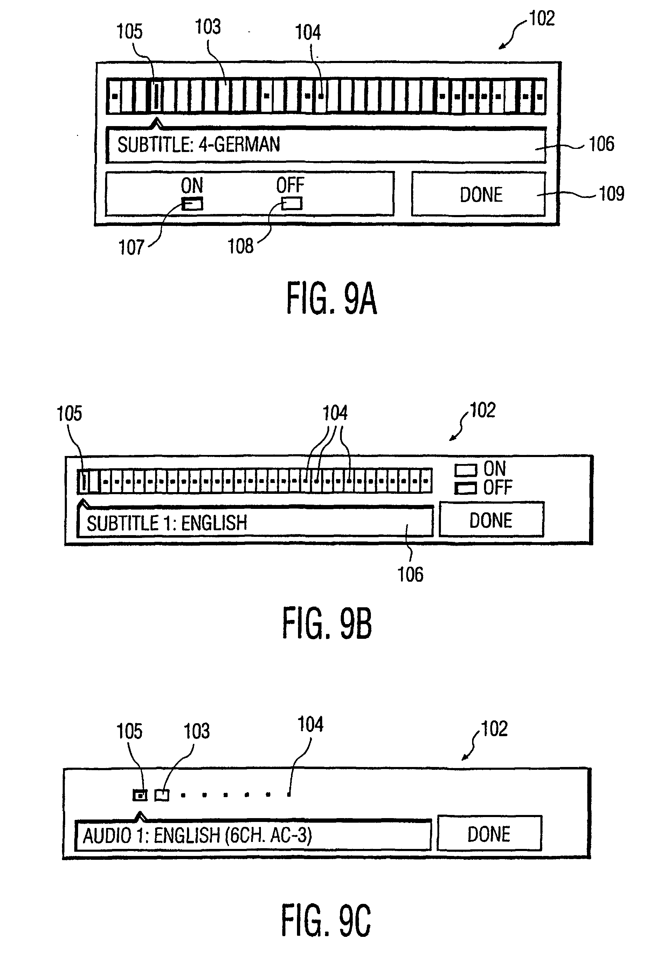

If the user wishes to select a new title, the user enters a number using a numeric keypad matrix on the remote control device or keyboard. When the new title number is entered, text display 76 provides information regarding the newly selected title and disc player 24 begins play from the beginning point of that title. Alternatively, the user may be required to press another key, such as the "ENTER" key, to actually begin play at the new title. When the user calls up display 75 and makes the various selections using display 75, the video playback continues in a background portion of the display. Therefore, the user is able to dynamically perform the searches and select new playback points. It is to be understood that the selection of button 79 may alternatively result in a separate menu dedicated to a title search to be displayed such as that shown in Fig. 9B and described in detail below. However, the aspect of dynamically performing the search and selecting a new title remains the same as above.

The operation of disc player 24 with regard to the part of title, or chapter, search feature is similar to that described for the title search. When the user selects button 80 in the manner described above, block 76 provides a text description of the current chapter in the manner described above. The text description may indicate the number of the current chapter and the total number of chapters available, e.g., "chapter 1 of 20". As above, the user may enter a new chapter number to switch playback to a new chapter. Again, the search and selection is dynamically performed thereby avoiding the inconvenience described above. Fig. 5C provides a specfic example of the display in text box 76 associated with highlighting of button 80.

Also in regard to Fig. 5A, highlighting and/or selecting other buttons shown in Fig. 5A provides additional functions concerning other ones of the portions of program information on the disk. For example, highlighting or selecting button 83 provides information about subtitles. Also, button 84 in Fig. 5A enables control of the audio stream selected for providing the audio information output during playback mode. Highlighting button 84 without selecting the button causes the text box shown in Fig. 5A to provide descriptive information indicating which audio stream is currently selected. In addition, the text box provides information regarding attributes of the audio stream. For example, the text box may show the language used in the audio stream, the format of the audio stream, e.g., MPEG, AC3, etc., and the number of channels of audio provided. As an example, the text box may state "German, 6 channel AC3". A specific example of the text display associated with highlighting of button 84 is shown in Fig. 5D. If button 84 is selected, e.g., "clicking" on the button such as by pressing an "enter" key, a submenu such as that shown in Fig. 9A is displayed providing for further control of the audio function as described below.

It is herein recognized that the dynamic title and part of title selection feature may be implemented using any one of a number of conventionally known methods, or combination of methods, for controlling the various elements of disc player 24 described above, for example by using embedded software in a microcontroller. Also, the present dynamic selection feature may be implemented for any signal processing system which can be configured to process data which is stored or received in predetermined portions, for example DVD-ROM system, Laser Disc systems, etc. Therefore, it is to be understood that the present invention is intended to cover all modifications as would fall within the true scope and spirit of the present invention.

Different titles can be dynamically selected as a feature of disk player 24. Different Titles allow a viewer to see multiple videos on one DVD disk. A maximum of ninety-nine (99) titles are allowed on one disk. Thus, it is possible to record several different movies onto one disk. Also, a maximum of nine hundred ninety-nine (999) chapters are allowed per title. Thus, a single title can contain several chapters, i.e., all the episodes of a sitcom or show. The titles and chapters are accessed via the Video Title Set which is contained on-disk. This allows a user to play one title while dynamically accessing what title or chapter is available on-disk and then dynamically changing what is being played on disk player 24 to the desired title or chapter.

Fig. 9A illustrates an on-screen display 102 suitable for providing information about available subtitles on a particular disk. On screen display 102 is displayed in response to user selection of buttons included in the display shown in Fig. 5, e.g., buttons 79, 80, 83 or 84 of information display 75 of Fig. 5A. Consequently there are various forms for on screen display 102. For example, one form is for providing information about portions of program information included on the disk comprising titles and is activated in response to user selection of button 79. Another form is for providing information about portions of program information included on the disk comprising chapters in a previously selected title on a disk and is activated in response to user selection of button 80. Another form is for providing information about portions of program information included on the disk comprising audio streams and is activated in response to user selection of button 84. These forms are similar except for the description text which provides information about the particular type of program information associated with the button selected in Fig. 5A, e.g., titles, chapters, or audio stream.

As shown in Fig. 9A, subtitle information on screen display 102 indicates all of the possible subtitles that could possibly be included on the disk according to e.g. the DVD specification, and also those subtitles which are actually present and available (i.e. authored) on the disk. The on screen display 102 also indicates which of the available subtitles is selected, along with a text description of the selected subtitle. In display 102, buttons 103 represent the subtitles that are authored on the disk and dots 104 represent subtitles which could possibly be included, but which are not available on the particular disk. The items on display 102 may be highlighted and/or selected using one of a plurality of conventionally known methods such as using cursor controls on a remote control device or a keyboard to move a highlight or a cursor on the display.

Pointer 105 is moved by the user to highlight or select a particular subtitle and to obtain information about the selected subtitle via text block 106. When highlighted (i.e., pointed to by the cursor but not selected), the respective button 103 changes shape and/or color to indicate the highlight and a text description of a subtitle appears in block 106. That is, highlighting a button provides information to a user, such as a description of a particular subtitle without actually selecting or changing to that subtitle. Selecting a particular button causes the text display to provide information about the particular subtitle and also causes the player to begin displaying the newly selected subtitle. Buttons 107 and 108 allow the user to turn ON and OFF the subtitle respectively. Alternatively, the selected subtitle may automatically be displayed when the button corresponding to that subtitle is selected by pointer 105, as described above. Button 109 allows a user to turn off subtitle on screen display 102.

In the form of display 102 of Fig. 9C which is associated with audio stream information (i.e., button 84 selected in Fig. 5A), the text box provides information regarding audio streams on the disk. For example, by highlighting one of buttons 103 in Fig. 9C, the text box will describe the audio stream associated with that button without actually selecting the button, i.e., without actually selecting to play the audio stream associated with that button. For example, the text displayed in the text box may indicate "German, 6 channel AC3". Thus, the user interface shown in Fig. 5A-D and Fig. 9A-C provides information regarding attributes of portions of program information included on a DVD disc without before actually selecting a particular portion of program information, thereby aiding user navigation of the program information.

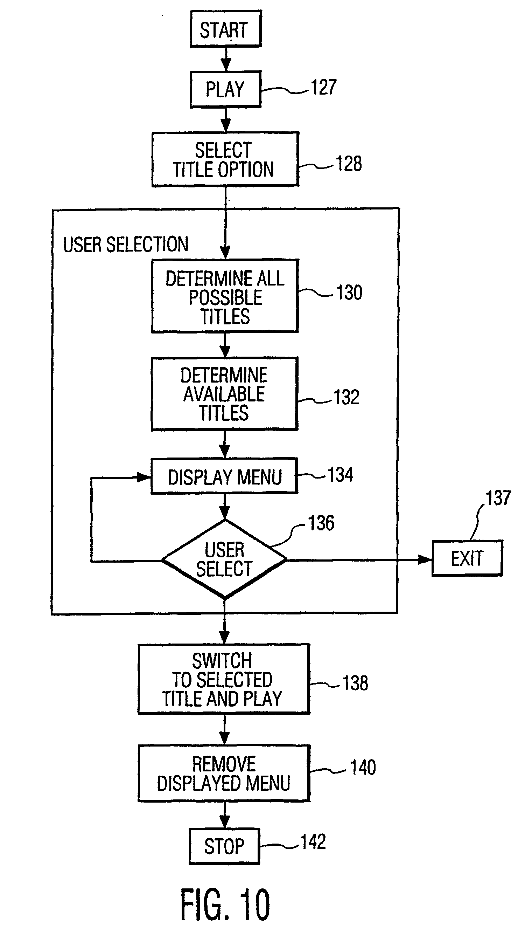

Figure 10 is a flowchart illustrating the steps for implementing the displaying and dynamically selecting among a plurality of titles on a DVD disk, on a DVD. In step 127, disc player 24 (of Fig. 1) waits for the user to send a PLAY command and upon receiving the PLAY begins to play a title stored on a DVD disk. In step 128, the user can press button 79 of information display 75 (of fig. 5A) to display and select a title on the disk to play. In step 130, disk player 24 determines all possible titles that could be recorded on the disk. In the illustrated embodiment of a DVD disk, this number is derived from the DVD spec. In step 132, disk player 24 will determine what titles are actually present and available on the disk, i.e. those titles authored on the disk and e.g. not blocked with a parent block. In step 134, an on-screen display (102 of Fig. 9A) incorporating the information derived in steps 130 and 132 is overlaid, in a known manner, onto the video display generated by the disk player 24. The on screen display 102 displays all possible titles, and those available on the disk, and allows the user to change the title while continuing to watch the current title playback in a background portion of the video display. In step 136, the user is allowed to select an available title in step 134. If the user does not change the displayed title, disk player 24 goes to step 137 and waits for further user commands and eventually exits the routine without changing the title. In step 136, if the user selects a different title. The disk player 24 goes to step 138 and selects to the new title and plays it. In step 140, after disk player 24 switches and plays the new title, said on-screen display is no longer overlaid onto the video display generated by the disk player 24 and the video signal processing system returns to a normal display. The system then exits the routine in step 142.

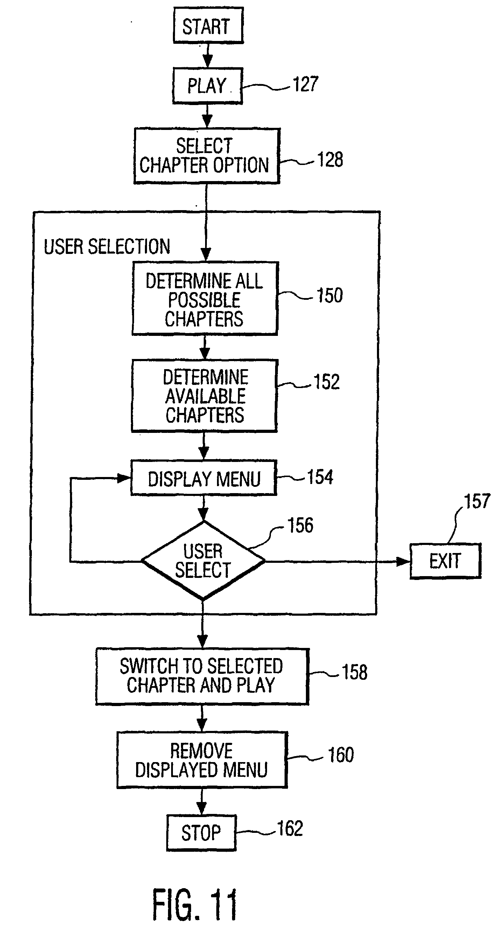

Figure 11 is a flowchart illustrating the steps for implementing the displaying and dynamically selecting among a plurality of chapters within a title on a DVD disk, on a DVD Player. In Fig. 11, those steps which are similar to those illustrated in Fig. 10 are designated by the same reference number. In step 127, disc player 24 (of fig. 1) waits for the user to send a PLAY command and upon receiving the PLAY begins to play a title and a chapter of that title, stored on a DVD disk. In step 128, the user can press button 80 of information display 75 (of fig. 5) to display and select a chapter of the title currently being played. In step 150, disk player 24 determines all possible chapters within a title which could be recorded on the disk. In the illustrated embodiment of a DVD disk, this number is derived from the DVD spec. In step 152, disk player 24 determine what chapters are present and available, i.e. those chapters authored on the disk and e.g. not blocked with a parent block. In step 154, an on-screen display (102 of Fig. 9) is overlaid, in a known manner, onto the video display generated by the disk player 24. The on screen display 102 displays all possible chapters, and those available on the disk, and allows the user to change the chapter while continuing to watch the current title playback in a background portion of the video display. In step 156, the user is allowed to select from among the available chapters displayed in step 154. If the user does not elect to change to a different chapter, disk player 24 goes to step 157 and waits for further user commands and eventually exits the routine without changing the chapter. In step 156, if the user elects to change to a different chapter, the disk player 24 goes to step 158 and switches to the new chapter and plays it. In step 160, after disk player 24 switches and plays the new chapter, said on-screen display is no longer overlaid onto the video display generated by the disk player 24 and the video signal processing system returns to a normal display. The system then exits the routine in step 162.

As noted above, the present invention recognizes that an annoyance and inconvenience may be caused if a user is forced to stop playback of a disc, call up the menus, make the appropriate selections of titles or chapters and restart the disc each time the user wants to search a disc or video title set and select a new point for starting playback. Even if the user is not directly required to start and stop disc playback, the disc player automatically halts playback of the disc and restarts the disc when the user selects the title or chapter.

It will be apparent to those skilled in the art that although the present invention has been described in terms of an exemplary embodiment, modifications and changes may be made to the disclosed embodiment. For example, the described method and apparatus may be useful in regard to portions of information stored on a storage medium other than the titles and chapters discussed above. In particular, the described method and apparatus may be useful in regard to changing during playback mode the data stream that is the source of data for playback. As a specific example, the described invention may be useful for switching between different video data streams, or different audio data streams, or different subpicture data streams that may exist on a storage medium such as a DVD disc.

## Claims

1. A method for controlling a system for processing information stored on a selected storage medium, including a program and a plurality of portions of program information, the method comprising the steps of:
accessing and processing (127) a first one of the plurality of portions of program information during a playback mode of operation; and
providing (134) to a user, during the playback mode of operation, an opportunity to select a second one of the plurality of portions of program information responsive to user input, **characterized by**
determining (130,150) all of the possible portions of program information permitted on the storage medium in conformance with the DVD specification,
determining (132,152) the portions of program information actually present on the selected storage medium comprising evaluating control data stored on the selected digital video disk, and
generating (134,154) an on-screen display displaying all of the possible portions of program information permitted on the storage medium and which of the possible portions of program information are actually present on the selected storage medium, the display allowing the user to select (136,156) one of the portions of program information actually present on the selected storage medium.

2. The method of claim 1, **characterized in that** the portions of program information comprises chapters, audio streams or subtitle streams.

3. The method of claim 2, **characterized in that** if the portions of program information comprises audio streams, the on-screen display (102) provides information indicating a language, a type of audio information, and a number of channels associated with the audio information.

4. The method of claim 2, **characterized in that** the generating step comprises generating an on-screen display (102) as an overlay onto a portion of a video display for enabling a user to select the second one of the plurality of portions of program information while continuing to watch program playback in a background portion of the video display.

5. The method of claim 3, **characterized in that** the generating step comprises generating (134, 154) an on-screen display to allow a user to select the second one of the plurality of portions of program information without interrupting a PLAY mode of the system.

6. Apparatus for processing information stored on a storage medium including a program and a plurality of portions of program information, the apparatus comprising:
a data processing unit (28, 30) for accessing and processing the program and a selected one of the plurality of portions of program information during a PLAY mode of operation;
a user control device (41) for receiving user input;
an on-screen display unit (34, 35) for generating on-screen displays; and
a control unit (40), coupled to the data processing unit, user control device, and on-screen display unit, for conditioning the storage medium data processing unit to activate the play mode of operation in response to user input, the apparatus providing to the user an opportunity to select a second one of the plurality of portions of program information, **characterized in that**,
the control unit determines (130, 150) all of the possible portions of program information permitted on the storage medium in conformance with the DVD specification, and determines (132, 152) the portions of program information actually present on the selected storage medium comprising evaluating control data stored on the selected digital video disk, and
the on-screen display unit generates (134, 154) an on-screen display displaying all of the possible portions of program information permitted on the storage medium and which of the possible portions of program information are actually present on the selected storage medium, the display allowing the user to select one of the portions of program information actually present on the selected storage medium.

7. The apparatus of claim 6, **characterized in that** the portions of program information comprises chapters, audio streams or subtitle streams.

8. The apparatus of claim 7, **characterized in that** if the portions of program information comprises audio streams, the on-screen display (102) includes information indicating a language, a type of audio information, and a number of channels associated with the audio information.

9. The apparatus of claim 7, **characterized in that** the on-screen display (102) is an overlay onto a portion of a video display for enabling a user to select the second one of the plurality of portions of program information while continuing to watch program playback in a background portion of the video display.

10. The apparatus of claim 8, **characterized in that** the on-screen display (102) allows a user to select the second one of the plurality of portions of program information without interrupting a PLAY mode of the system.

## Patentansprüche

1. Verfahren zur Steuerung eines Systems zur Verarbeitung von auf einem gewählten Speichermedium gespeicherten Informationen mit einem Programm und mehreren Teilen von Programminformationen mit folgenden Schritten:
Zugriff zu und Verarbeitung (127) eines ersten Teils der mehreren Teile von Programminformationen während eines Wiedergabe-Betriebsmodus und
Bildung (134) einer Möglichkeit für einen Benutzer, einen zweiten Teil der mehreren Teile von Programminformationen aufgrund einer Benutzereingabe während des Wiedergabe-Betriebsmodus zu wählen,
**gekennzeichnet durch**
Ermittlung (130, 150) aller möglichen Teile von Programminformationen, die auf dem Speichermedium entsprechend der DVD-Spezifikation zulässig sind,
Ermittlung (132, 152) der Teile von Programminformationen, die tatsächlich auf dem gewählten Speichermedium anwesend sind, einschließlich das Auswerten von Steuerdaten, die auf der gewählten digitalen Videoplatte gespeichert sind, und
Erzeugung (134, 154) einer Bildschirmwiedergabe, die alle möglichen Teile von Programminformationen, die auf dem Speichermedium zulässig sind, anzeigt und anzeigt, welche der möglichen Teile der Programminformationen tatsächlich auf dem gewählten Speichermedium anwesend sind, wobei die Wiedergabe ermöglicht, daß der Benutzter einen der Teile von Programminformationen wählt (136, 156), die tatsächlich auf dem gewählten Speichermedium anwesend sind.

2. Verfahren nach Anspruch 1, **dadurch gekennzeichnet, daß** die Teile von Programminformationen Kapitel, Audioströme oder Untertitelströme enthalten.

3. Verfahren nach Anspruch 2, **dadurch gekennzeichnet, daß** die Teile von Programminformationen Audioströme enthalten und die Bildschirmwiedergabe (102) Informationen liefert, die eine Sprache, einen Typ von Audioinformationen und eine Zahl von Kanälen für die Audioinformationen anzeigen.

4. Verfahren nach Anspruch 2, **dadurch gekennzeichnet, daß** der Schritt zum Erzeugen die Erzeugung einer Bildschirmwiedergabe(102) als eine Überlagerung auf einem Teil einer Videowiedergabe enthält, um zu ermöglichen, daß ein Benutzer den zweiten Teil der mehreren Teile von Programminformationen wählt, während er das in einem Hintergrundteil der Videowiedergabe wiedergegebene Programm weiterhin betrachten kann.

5. Verfahren nach Anspruch 3, **dadurch gekennzeichnet, daß** der Schritt zum Erzeugen die Erzeugung (134, 154) einer Bildschirmwiedergabe enthält um zu ermöglichen, daß ein Benutzer den zweiten Teil der mehreren Teile von Programminformationen wählt, ohne einen Wiedergabemodus des Systems zu unterbrechen.

6. Vorrichtung zur Verarbeitung von auf einem Speichermedium gespeicherten Informationen mit einem Programm und mehreren Teilen von Programminformationen mit:
einer Datenverarbeitungseinheit (28, 30) zum Zugriff zu und zur Verarbeitung des Programms und eines ausgewählten Teiles der mehreren Teile von Programminformationen während eines Wiedergabe-Betriebsmodus,
einer Benutzer-Steuereinheit (41) zum Empfang einer Benutzereingabe,
einer Bildschirmwiedergabeeinheit (34, 35) zur Erzeugung von Bildschirmwiedergaben und
einer Steuereinheit (40), die mit der Datenverarbeitungseinheit verbunden ist, einer Steuereinheit und einer Bildschirmwiedergabeeinheit, um zu bewirken, daß die Datenverarabeitungseinheit für das Speichermedium den Wiedergabebetriebsmodus aufgrund einer Benutzereingabe aktiviert, die Vorrichtung dem Benutzer eine Möglichkeit bietet, einen zweiten Teil der mehreren Teile von Programminformationen zu wählen, **dadurch gekennzeichnet, daß**
die Steuereinheit (130, 150) alle möglichen Teile von Programminformationen, die gemäß der DVD-Spezifikation auf dem Speichermedium zulässig sind, und die Teile von Programminformationen ermittelt (132, 152), die tatsächlich auf dem gewählten Speichermedium anwesend sind, einschließlich das Auswerten von Steuerdaten, die auf der gewählten digitalen Videoplatte gespeichert sind, und
wobei die Bildschirmwiedergabeeinheit eine Bildschirmwiedergabe erzeugt (134, 154), die alle möglichen Teile von Programminformationen wiedergibt, die auf dem Speichermedium zulässig sind, und welche der möglichen Teile von Programminformationen tatsächlich auf dem gewählten Speichermedium anwesend sind, und die Wiedergabe ermöglicht, daß der Benutzer einen der Teile von Programminformationen wählt, die tatsächlich auf dem gewählten Speichermedium anwesend sind.

7. Vorrichtung nach Anspruch 6, **dadurch gekennzeichnet, daß** die Teile von Programminformationen Kapitel, Audioströme oder Untertitelströme enthalten.

8. Vorrichtung nach Anspruch 7, **dadurch gekennzeichnet, daß** dann, wenn die Teile von Programminformationen Audioströme enthalten, die Bildschirmwiedergabe (102) Informationen enthält, die eine Sprache, einen Typ von Audioinformationen und eine Zahl von zu den Audioinformationen gehörenden Kanälen anzeigt.

9. Vorrichtung nach Anspruch 7, **dadurch gekennzeichnet, daß** die Bildschirmwiedergabe (102) eine Überlagerung auf einem Teil einer Videowiedergabe ist, um zu ermöglichen, daß ein Benutzer den zweiten Teil der mehreren Teile von Programminformationen wählt, während er die Programminformationen in einem Hintergrundteil der Videowiedergabe weiterhin betrachten kann.

10. Vorrichtung nach Anspruch 8, **dadurch gekennzeichnet, daß** die Bildschirmwiedergabe (102) ermöglicht, daß ein Benutzer den zweiten Teil der mehreren Teile von Programminformationen wählt, ohne einen Wiedergabemodus des Systems zu unterbrechen.

## Revendications

1. Méthode de contrôle d'un système pour traiter des informations stockées sur un support de stockage sélectionné, comprenant un programme et une pluralité de portions d'informations de programme, la méthode comprenant les étapes suivantes :
accès et traitement (127) d'une première partie parmi la pluralité de portions d'informations de programme durant un fonctionnement en mode de reproduction ; et
fourniture (134) à un utilisateur, durant le fonctionnement en mode de reproduction, d'une possibilité de sélectionner une seconde partie parmi la pluralité de portions d'informations de programme en réponse à une entrée utilisateur, **caractérisée par**
la détermination (130, 150) de toutes les portions d'informations de programme possibles autorisées sur le support de stockage conformément à la spécification DVD,
la détermination (132, 152) des portions d'informations de programme effectivement présentes sur le support de stockage sélectionné comprenant l'évaluation de données de contrôle stockées sur le disque vidéo numérique sélectionné, et
la génération (134, 154) d'un affichage à l'écran affichant toutes les portions d'informations de programme possibles autorisées sur le support de stockage et lesquelles des possibles portions d'informations de programme sont effectivement présentes sur le support de stockage sélectionné, l'affichage permettant à l'utilisateur de sélectionner (136, 156) l'une des portions d'informations de programme effectivement présentes sur le support de stockage sélectionné.

2. Méthode selon la revendication 1, **caractérisée en ce que** les portions d'informations de programme comprennent des chapitres, des flux audio ou des flux de sous-titres.

3. Méthode selon la revendication 2, **caractérisée en ce que** si les portions d'informations de programme comprennent des flux audio, l'affichage à l'écran (102) fournit des informations indiquant une langue, un type d'informations audio et un nombre de canaux associé aux informations audio.

4. Méthode selon la revendication 2, **caractérisée en ce que** l'étape de génération comprend la génération d'un affichage à l'écran (102) comme superposition sur une portion d'un affichage vidéo pour permettre à un utilisateur de sélectionner la seconde partie parmi la pluralité de portions d'informations de programme tout en continuant à visionner la reproduction du programme dans une portion en arrière-plan de l'affichage vidéo.

5. Méthode selon la revendication 3, **caractérisée en ce que** l'étape de génération comprend la génération (134, 154) d'un affichage à l'écran pour permettre à un utilisateur de sélectionner la seconde partie parmi la pluralité de portions d'informations de programme sans interrompre un mode LECTURE du système.

6. Appareil de traitement d'informations stockées sur un support de stockage, comprenant un programme et une pluralité de portions d'informations de programme, l'appareil comprenant:
une unité de traitement de données (28, 30) pour accéder et traiter le programme et une première portion sélectionnée parmi la pluralité de portions d'informations de programme, durant un fonctionnement en mode LECTURE;
un dispositif de contrôle utilisateur (41) pour recevoir une entrée utilisateur ;
une unité d'affichage à l'écran (34, 35) pour générer des affichages à l'écran ; et
une unité de contrôle (40) couplée à l'unité de traitement de données, au dispositif de contrôle utilisateur et à l'unité d'affichage à l'écran pour conditionner l'unité de traitement des données du support de stockage à activer le fonctionnement en mode lecture en réponse à l'entrée utilisateur, l'appareil offrant à l'utilisateur la possibilité de sélectionner une seconde partie parmi la pluralité de portions d'informations de programme, **caractérisé en ce que**
l'unité de contrôle détermine (130, 150) toutes les portions d'informations de programme possibles autorisées sur le support de stockage conformément à la spécification DVD et détermine (132, 152) les portions d'informations de programme effectivement présentes sur le support de stockage sélectionné comprenant l'évaluation de données de contrôle stockées sur le disque vidéo numérique sélectionné et
l'unité d'affichage à l'écran génère (134, 154) un affichage à l'écran affichant toutes les portions d'informations de programme possibles autorisées sur le support de stockage ainsi que les possibles portions d'informations de programme effectivement présentes sur le support de stockage sélectionné,
l'affichage permettant à l'utilisateur de sélectionner l'une des portions d'informations de programme effectivement présentes sur le support de stockage sélectionné.

7. Appareil selon la revendication 6, **caractérisé en ce que** les portions d'informations de programme comprennent des chapitres, des flux audio ou des flux de sous-titres.

8. Appareil selon la revendication 7, **caractérisé en ce que** si les portions d'informations de programme comprennent des flux audio, l'affichage à l'écran (102) comporte des informations indiquant une langue, un type d'informations audio et un nombre de canaux associé aux informations audio.

9. Appareil selon la revendication 7, **caractérisé en ce que** l'affichage à l'écran (102) est une superposition sur une portion d'un affichage vidéo pour permettre à un utilisateur de sélectionner la seconde partie parmi la pluralité de portions d'informations de programme tout en continuant à visionner la reproduction du programme dans une portion en arrière-plan de l'affichage vidéo.

10. Appareil selon la revendication 8, **caractérisé en ce que** l'affichage à l'écran (102) permet à un utilisateur de sélectionner la seconde partie parmi la pluralité de portions d'informations de programme sans interrompre un mode LECTURE du système.
